# EUROPEAN PATENT SPECIFICATION

(11) **EP 1 151 023 B1**
(45) Date of publication and mention of the grant of the patent: **04.09.2002**
(21) Application number: 00900968.9
(22) Date of filing: 07.01.2000
(51) Int. Cl.: C08G 18/28, C08G 18/38, C09D 163/00, C09D 175/04

(54) **COMPOSITION FOR MANUFACTURING COATINGS HAVING A LOW SURFACE ENERGY, SUCH COATINGS, AND METHOD FOR MANUFACTURING SAME**
ZUSAMMENSETZUNG ZUR HERSTELLUNG VON BESCHICHTUNGEN MIT NIEDRIGER OBERFLÄCHENENERGIE, SOLCHE BESCHICHTUNGEN UND VERFAHREN ZUR HERSTELLUNG SOLCHER BESCHICHTUNGEN
COMPOSITION POUR LA FABRICATION DE REVETEMENTS PRESENTANT UNE ENERGIE SUPERFICIELLE BASSE, DE TELS REVETEMENTS ET LEUR PROCEDE DE FABRICATION

(30) Priority: 08.01.1999 NL 1010983
(43) Date of publication of application: 07.11.2001
(73) Proprietor: Nederlandse Organisatie voor toegepast-natuurwetenschappelijk Onderzoek TNO, 2628 VK Delft (NL)
(72) Inventor: KRUPERS, Maarten, Johannes, NL-2565 LC The Hague (NL)
(74) Representative: Prins, Adrianus Willem
(86) International application number: NL0000011
(87) International publication number: WO00040633

(56) References cited:
- EP-A- 0 271 873
- EP-A- 0 719 809
- WO-A-98/44015
- US-A- 5 128 435
- US-A- 5 637 772

## Description

The invention relates to a composition for manufacturing coatings having a low surface energy, such a coating, and a method for manufacturing same.

Coating layers or coatings are generally used for only one specific function. Thus, it is usual to protect a material against corrosion, fouling or weather influences by applying thereto a coating layer which offers such protection. Adhesion-promoting layers, such as primers, etc., are also often applied to materials. This has the disadvantageous result that, for an optimum and general functioning of a coating, different layers each having their own advantageous properties must be applied. It is self-evident that this is connected with a significant increase of cost with respect to a more ideal coating system for which only a single coating layer is necessary which combines a number of advantageous properties. The object of the present invention is to provide such a coating system, consisting of one layer, which combines different advantageous properties.

It is known that layers of Teflon® (polytetrafluoroethylene; PTFE) have a number of favorable properties. Teflon® is highly inert and stable and has a very low surface energy. The use of PTFE, however, also has a number of evident disadvantages. PTFE is difficult to process, in particular because of its poor solubility in conventional but also halogenated solvents. Furthermore, it gives rise to much creep.

It has been proposed that these disadvantages be, at least partly, removed by adding, e.g., hexafluoropropylene during the polymerization of PTFE, in order to build short side chains into the polymer. Such side chains make the material less crystalline and give it a rapidly falling melting viscosity. The material, however, remains poorly soluble and is in fact only applicable from a dispersion, for which high temperatures are required.

A third generation of PTFE material is so-called Amorphous PTFE, e.g. Teflon® AF, (DuPont). This material is soluble in specific fluorine-containing solvents. The disadvantage, however, is that the cost for obtaining and using this material is so high that, from a commercial point of view, it is not interesting to use this material on a large scale.

In the prior art, with the object of the present invention in mind, it has been proposed that specific additives be brought into coating compositions. Thus, for instance, U.S. patent 5,008,135 describes that the friction coefficient of a coating material can be reduced by adding Teflon® powder thereto. As a rule, this proposal only gives a partial and temporary effect.

An improvement in this method is described in, e.g., U.S. patent 5,543,200, in which it is proposed that a prepolymer be prepared from one or more monohydric fluorine compounds, in particular an alcohol of a linear perfluoroalkyl compound, one or more non-fluorinated polyols and one or more polyisocyanates. These prepolymers are then processed into a coating in which the fluorine compounds are covalently integrated into a polymer netwerk, in particular into a polyurethane coating.

Thus, Krupers *et al.,* in Macromolecules, 31(8), 1998, 2552-2558, also propose that fluorine compounds, in particular oligo(hexafluoropropylene oxide) groups, be incorporated into polymers for coating layers, in particular into polymethacrylates.

It is also known from EP-A-0 719 809 to prepare modified polyurethanes by reacting linear functional fluorine compounds with isocyanates in a first step and curing them with polyols in a next step. It is suggested that according to this multi-step method fluorine-containing compounds are practically homogeneously build into the polyurethane netwerk.

A comparable process is known from WO 98/44015. In this multi-step method, polyisocyanates are reacted with difunctional hydroxy-terminated fluorine compounds and then cross-linked to a matrix by means of a conventional polyol, not containing fluorine. Here, too, it is a disadvantage that the relatively expensive fluorine polymer homogeneously is homogeneously spread through the polymer matrix. Consequently, the advantageous effects of the fluorine compound are only partly obtained or utilized.

EP-A-0 271 873 describes the use of difunctional fluorine-containing epoxy prepolymers which, together with conventional epoxy prepolymers and an amino curing agent, can be formed to a polymer netwerk in which fluorine is incorporated into the basic structure. A variant of this last-discussed method is described in US-A-5,637,772, which uses bifunctional fluorine compounds having terminal amino groups, which, for instance, can be combined with polyisocyanates.

US 5,128,405 uses polyisocyanate resin modified with fluorine chains which is cured together with an epoxy resin not containing fluorine and a phenolic curing agent.

By the use of fluorinated prepolymers which form part of the polymeric main structure only a small part of the fluorinated components is actually used to obtain favorable properties of a coating. This is a clear disadvantage of the use of fluorinated prepolymers.

In these systems the fluorine is substantially homogeneously incorporated into the polymer matrix, which is a disadvantage of this known method.

A further disadvantage of this method is that the method for manufacturing the necessary polymer structures is complicated and that the favorable properties of the polymers modified with the fluorine compounds are often at least partly lost.

The object of the present invention is to transfer, by using functional fluorine compounds, the advantageous properties of these compounds, and in particular the low surface energy, the low friction coefficient, the good chemical resistance, the long service life, and the water, oil, fat and dirt repellency, in a simple manner to a conventional coating system not containing fluorine, without causing the loss of advantageous properties of this conventional system.

According to the present invention, this object is achieved with a composition comprising a curable coating system, consisting of a cross-linkable resin and a cross-linking agent, and a functional fluorine compound capable of reacting with the cross-linkable resin, and/or cross-linking agent, but having a lower reactivity than the cross-linking agent and/or cross-linkable resin.

In a second aspect the invention relates to an asymmetric coating layer, consisting of a cured coating system having on the air side a layer of functional fluorine compound covalently bonded to the cured system.

In a third aspect the invention relates to a method for coating a substrate comprising the application of a layer of the composition according to the invention, followed by curing the composition under such conditions that the functional fluorine compound migrates to the air side of the layer and then forms covalent bonds with the cross-linkable resin and/or the cross-linking agent.

A special advantage of the method according to the invention is that the fluorine compound can be introduced into the polymer matrix in a simple manner, preferably in a one-step method.

More in detail, the coating composition according to the invention contains a curable system, for instance a two-component coating system, such as a conventional thermosetting two-component coating system, such as a system consisting of an epoxy resin as cross-linkable resin and an amine or carbodiimide cross-linking agent, or a urethane resin/isocyanate system. Besides, the composition requires as essential component a functional fluorine compound capable of reacting with the cross-linkable resin and/or cross-linking agent, but having a lower reactivity than the cross-linking agent and/or cross-linkable resin. Suitable functional fluorine compounds possess a reactive group, such as a carboxylic acid group, a hydroxyl group, an amino group, and the like, which is capable of reacting with active groups of the basic coating system; and at least a fluorohydrocarbon group. The functional fluorine compound has a great mobility, it is flexible, non-linear and substantially non-crystalline. When a side chain, such as a trifluoromethyl group is attached to the fluorohydrocarbon group, or when the fluorohydrocarbon group is otherwise non-linear or non-crystalline, for instance through the presence of an ether group, the fluorohydrocarbon chains will not all be able to extend in the same direction, so that a more effective protective layer is formed.

Thus, a suitable functional fluorine compound capable of reacting with a curable epoxy resin is a carboxylic acid-containing fluorohydrocarbon, and in particular a monocarboxylic acid-terminated perfluoropolyether compound. The monocarboxylic acid-terminated perfluoropolyether compound gives, together with a conventional epoxy coating composition, a clear, colorless, homogeneous coating.

Suitable functional fluorine compounds are for instance:
branched fluorohydrocarbon acids having the formula CF₃-CFR-(CF₂)ₙ-COOH, in which n preferably ranges between 2 and 20, and R represents a substituted or unsubstituted C₁₋₄ alkyl group;
CₘF₂ₘ₊₁SO₂N(R¹)(-CR²R³)-(OCH₂CH₂)_{q}-OH, in which m ranges between 2 and 20, q ranges between 1 and 50, and R¹⁻³ are selected independently of each other from the group of hydrogen atoms and substituted or unsubstituted C₁₋₄ alkyl groups;
CₘF₂ₘ₊₁CON(R¹) (CH₂)ₜOH or CₘF₂ₘ₊₁SO₂N(R¹) (CH₂)ₜOH, in which m ranges between 2 and 20 and 1 ≤ t ≤ 2;
perfluoropolyether compounds having the formula F-(CF(CF₃)CF₂O)_{q}-CF(CF₃)-COOH, in which q ranges between 1 and 100, preferably between 2 and 50;
HOCH₂CF₂(CF₂CF₂O)ₓ(CF₂O)_{y}CF₂CH₂-OH, in which x and y can be selected such that this compound has a molecular weight ranging between preferably 242 and 4000;
compounds having the formula R_{F}-(X)ₙ-(CH₂CHRO)ₘ-H, in which R_{F} represents a straight or branched perfluoroalkyl group having 4-20 carbon atoms, and more preferably 6-12 carbon atoms, in which 1-5 fluorine atoms may optionally be replaced by chlorine atoms and/or hydrogen atoms, X is a divalent unit selected from -CH₂CH₂O-, -SO₂N(R)CH₂CH₂O-, -CH₂-, -O-, -CH₂O-, R represents a hydrogen atom or a C₁₋₄-alkyl group, n is 0 or 1, and m represents 0-30, except when n=0 and/or X= -O-, m is no 0.

The functional compounds most preferred according to the present invention are the carboxylic acid-terminated perfluoropolyether (PFPE) compounds. Of this type of compounds, a number is commercially available, for instance under the trade name of Krytox (DuPont). Besides, PFPE compounds, such as 1H,1H-perfluoro-2,5-dimethyl-3,6-dioxanonan-1-ol, 1H,1H-perfluoro-2,5,8-trimethyl-3,6,9-trioxadodecan-1-ol and 1H,1H-perfluoro-2,5,8,11-tetramethyl-3,6,9,12-tetraoxapentadecan-1-ol, are also available, which alcohols can be converted in a manner known to those skilled in the art into carboxylic acid compounds, which are likewise easy to prepare by saponification of the methyl ester of the PEPE compounds.

From the firm of Ausimont, too, PFPE's are obtainable, which can be used as such or as starting material for suitable functional PFPE's to be prepared, namely under the trade names of Fomblin Y (with CF₃-side chains), Fomblin Z (linear chains); R-CF₂-O-(CF₂-CF(CF₃)-O-)m-(CF₂O)ₙ-CF₃, in which R is, inter alia, -COOH (Galden MF 300 and 310), -CH₂OP(O)(OH)₂ (Galden MF 201), -CH₂OH (Galden MF402), CH₂(OC₂H₄)ₓOH (Galden MF403), and CH₂(OC₂H₄)₆OH (Galden MF406). The linear types are: R-CF₂-O-(CF₂-CF₂-O)ₚ-(CF₂-O)_{q}-CF₂-R, in which R is, inter alia, -COOH (Fluorolink C), CH₂OH (Fluorolink D), CH₂(OC₂H₄)ₓOH (Fluorink E) , CH₂OCH₂CHOHCH₂OH (Fluorolink T), CONHC₆H₃(CH₃)NCO (Fluorolink B), and further types based on the Fluorobase series, e.g., Fluorobase Z 1020; tetrafunctional OH-terminated PFPE; Fluorobase Z 1030; difunctional OH-terminated PFPE; Fluorobase Z 1040; tetrafunctional OH-terminated PFPE with a small amount of carboxylic acid groups; Fluorobase Z 1072; prepolymer with free isocyanate groups, formed from a difunctional OH-terminated PFPE with hexamethylenediisocyanate; Fluorobase Z 1073 I; a prepolymer with free isocyanate groups, formed from a difunctional OH-terminated PFPE with isophoronediisocyanate.

Very suitable systems formed according to the invention with a carboxylic acid-containing fluorohydrocarbon (R_{F}COOH), are:
1. Epoxy/amine systems in which the amine may be selected, e.g., from aliphatic polyamines (e.g. dipropylenetriamine; Eurodur 26 from Witco); cycloaliphatic polyamines (e.g. isophoronediamine; Eurodur 42 from Witco); aromatic polyamines (e.g. diaminophenylmethane); and araliphatic polyamines (e.g. xylylenediamine; Euredur 22 from Witco). These and other amines may optionally be further modified, so that resins as polyaminoamides are formed. Condensation products from tallow oil fatty acid and tetraethylpentamine (Euredur 250) and Mannich bases: condensation products from phenol, formaldehyde and trimethylhexamethyldiamine (Euredur 12) are, for instance, very suitable.
2. Epoxy acids (Epoxy-COOH) in combination with an amine.
3. Epoxy-COOH in combination with an amine and a carbodiimide.
4. Polyacids, such as polyacrylic acids, in combination with a polycarbodiimide.
5. Polyisocyanate (autocondensation).
6. Polyisocyanate in combination with a polyol.
7. Polyisocyanate in combination with a polyamine.
8. Oxazoline groups containing polymers in combination with a polyacid.
9. Optionally other mixed forms of the above-mentioned compositions.

Besides, the functional fluorine compound may also be added to a coating system which cures under the influence of a catalyst, e.g. the Euredur 13 system from Witco. This system uses 3-4 wt.% catalyst, based on the resin system, and functions at temperatures above 10°C.

More in general, curable systems which are standard used for anti-corrosion coatings for the building trade, curing at low temperature, as floor-covering material, chemical-resistant coatings, and the like; for polymer mortar and polymer concrete; for injection resins; for joint material; for adhesives; for fiber-reinforced plastics; for powder varnishes; for baking varnishes, and the like, may be combined with a functional fluorine compound suitable according to the invention.

Excellent results are obtained when the functional fluorine compound added is just sufficient to just cover the coating air surface with covalently bonded fluorine compound. To this end, an amount between 0.5 and 5, more preferably between 1 and 3 wt.%, and most preferably between 1 and 2 wt.%, based on the weight of the coating composition, is usually satisfactory. Depending on the system and the reaction conditions, those skilled in the art can simply determine this, as described below, using the Owens-Wendt-Rabel-Kaelble method. When such an amount of fluorine compound is used that not all fluorine compound can react with the resin and thus cannot be covalently built in, it is assumed that polar groups of the fluorine compound may remain which can at least temporarily disturb the effect of the covalently bonded fluorine compounds. Besides, those skilled in the art can simply adjust suitable amounts of the fluorine compound to the other components of the coating system.

The coating according to the invention has a surface energy measured according to the stated method within the range below 20 mN/m, and preferably below 15 mN/m.

When the composition comprising the essential coating components and the functional fluorine compound is brought onto a substrate and is subjected to conditions under which cross-linking comes to occur, a migration of the functional fluorine compound to the coating air surface occurs beside the cross-linking reaction. By selecting suitable cross-linking conditions, it can be guaranteed that substantially all the functional fluorine compounds migrate to the coating air surface and then react there with the reactive groups of the cross-linkable resin or the cross-linking agent to form a covalent bond. Thus, an asymmetric coating layer is formed.

When the system according to the invention gives no or insufficient adhesion onto the substrate, while the composition without the fluorine compound gives an acceptable adhesion, this composition without fluorine compound can be used as a kind of intermediate layer. Thus, a properly adhering asymmetric coating is formed after all.

Advantages of the present invention are that conventional coating systems can be used which can be applied in a conventional manner, so that substantially no changes are necessary in the conduct of the process. In these coating systems only the surface properties are changed, so that only a small amount of the functional fluorine compound is necessary. This small amount of functional fluorine compound binds selectively and covalently to the coating air surface, so that in one step an asymmetric coating is obtained which consists of a bulk material which hardly, if at all, changes in its properties and a thin fluorine compound-containing top layer which imparts a low surface energy, a low friction coefficient and water, oil, fat and dirt repellency to bulk material.

The curing temperature plays an important role for this type of coating systems. On the one hand, the migration of fluorine compounds to the coating air surface increases with increasing temperature. On the other hand, the reaction rate of the occurring reactions, such as reactions between epoxide + amine and epoxide + carboxylic acid, also increases at higher temperatures. It is therefore expedient to ensure that the fluorine compound first migrates to the surface and is then covalently built into the coating. After perusal of the description according to the invention this is within reach of those of average skill in the art. For, e.g., an epoxide amine cross-linker-fluorocarboxylic acid system, slightly lower values were obtained for the surface energy at a curing temperature of 140°C for the surface energy than when curing at 170°C.

That the curing temperature plays a great role for the product properties of the prepared fluorine-containing coatings appeared from experiments at lower temperatures. Coatings cured at a temperature of 50 and 80°C gave initially high contact angles for water drops, of ca. 110°, which, however, were not stable and decreased within a few seconds to ca. 95°. An explanation thereof could be that the reaction between epoxides and carboxylic acids which proceeds at higher temperature is not rapid enough, as a result of which the fluorine compound, true, migrates to the surface, but is not covalently built into the coating. At temperatures above 100°C the occurring cross-linking reactions and building-in of the fluorohydrocarbon compounds are usually sufficiently rapid.

Short curing times from, e.g., 30 minutes to 1 hour also gave good results.

The order of adding reactants did not play a role with respect to the resulting contact angles or other properties.

The mechanical properties of the coatings modified with fluorine are very good. By means of cross-cut scratch tests (ISO 2409-1992) and the MEK rub test (ASTM D 5402-93) it could be demonstrated that the adhesion of coating to aluminum substrate is excellent.

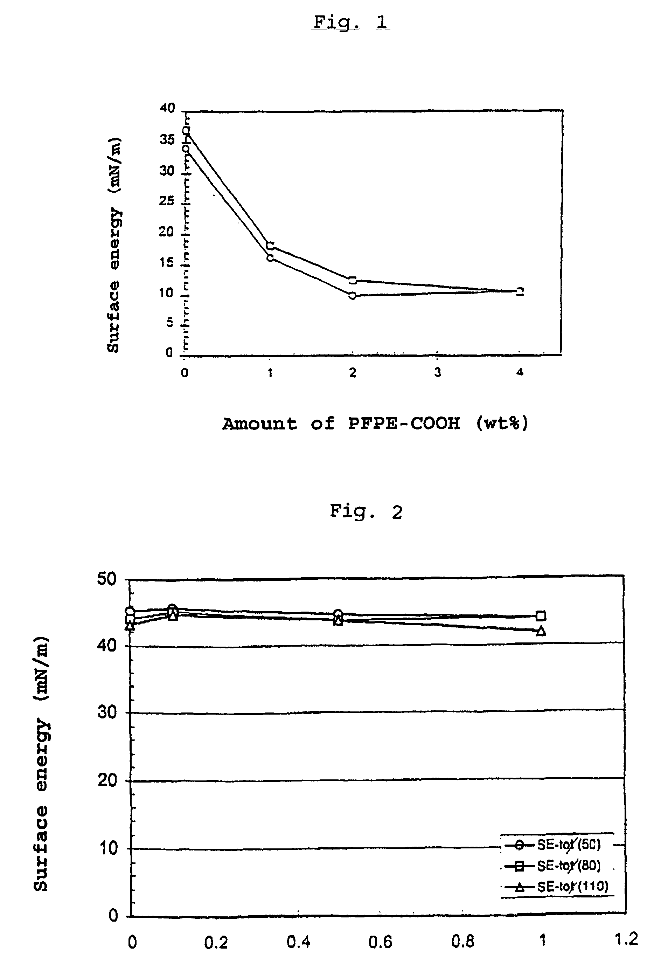

In the figures, Figure 1 is a graph in which the surface energy, measured according to the Owens-Wendt-Rabel-Kaelble method, is shown as a function of the added amount of PFPE-COOH and at two different curing temperatures (o = 140°C, = 170°C) ;
and Figure 2 is a graph in which the surface energy is shown as a function of the amount of added monofunctional fluorine alcohol, determined for polyurethane coatings cured for 24 hours at different temperatures (o = 50°C, = 80°C, Δ = 110°C).

The invention will now be explained in more detail on the basis of the following non-limitative examples.

### Example 1

### Materials

Eurepox 721 (modified, low viscous, crystallization-stable epoxide resin, Witco), Eurodur 14 (amine-containing, phenol-free rapid cross-linker for epoxide resins, Witco), and Krytox 157 FSL (monocarboxylic acid-terminated perfluoropolyether having a molecular weight of ca. 2500:

F- (CF (CF₃CF₂O)ₚCF(CF₃)CF₂COOH

(DuPont)) were used without further cleaning.

### Coating preparation

3.74 g Eurepox (Epox, Witco) were weighed into a 25 ml flask. Then 1.35 g Euredur 14 (Dur, Witco) and 0.10 g Krytox 157-FSL (PFPE-COOH, DuPont) were added. The mixture was stirred for 2 minutes with a spatula and then applied onto an aluminum plate (degreased in a boiling 2-propanol/*n*-hexane bath). A 50 µm spreading knife was used to spread the mixture. The coating was cured for 24 hours at 140°C. At the end a clear, colorless homogeneous coating was formed.

### Example 2

The coatings prepared were evaluated with respect to their surface properties. For this purpose, contact angles of drops of water and diiodomethane, applied onto coating substrates, were measured. By means of the Owens-Wendt-Rabel-Kaelble (OWRK) method (e.g. described in Owens et al., J. Appl. Polym. Sci. 13 (1969), 1741; Kaelble, J. Adhesion 2 (1970) 66) the surface energy was determined from the measured contact angles. This was found to give an indication for the amount of fluorine groups present in the surface.

In Figure 1, the surface energies of fluorine-containing epoxy coatings are plotted as a function of the amount of added PFPE-COOH. Figure 1 clearly shows that already at a small amount of PFPE-COOH the surface energy strongly decreases. At 2 wt.% PFPE-COOH the minimum value of ca. 10 mN/m is already reached, and the addition of more PFPE-COOH does not yield a lower surface energy. This surface energy indicates a surface completely covered with PFPE-COOH chains.

### Example 3

Example 1 was repeated, in which coatings were prepared with different amounts of PPPE-COOH. They were also cured at 170°C. Of these coatings the surface energy was determined according to the Owens-Wendt-Rabel-Kaelble method as in example 2. The coatings prepared and the surface energy determined are listed in Table 1.

**Table 1.**

| *Tested epoxy binder*/*amine cross-linker*/*PFPE coating recipes (different PFPE content and curing temperature) were cured for 24 hours. Per coating the surface energy determined according to the Owens-Wendt-Rabel-Kaelble method is also given.* | | | | | | | |
|---|---|---|---|---|---|---|---|
| Epoxy | Amine | PFPE-COOH | PFPE-COOH | T⁽¹⁾ | γₜₒₜ⁽²⁾ | γ_{d}⁽³⁾ | γₚ⁽⁴⁾ |
| (g) | (g) | (g) | (wt%) | (°C) | (mN/m) | (mN/m) | (mN/m) |
| | | | | | | | |
| 3.74 | 1.50 | 0.00 | 0 | 140 | 34 | 32 | 2 |
| 3.74 | 1.35 | 0.00 | 0 | 140 | - | - | - |
| 3.74 | 1.35 | 0.05 | 1 | 140 | 16 | 16 | 0 |
| 3.74 | 1.35 | 0.10 | 2 | 140 | 10 | 10 | 0 |
| 3.74 | 1.35 | 0.20 | 4 | 140 | 11 | 10 | 0 |
| | | | | | | | |
| 3.74 | 1.50 | 0.00 | 0 | 170 | 37 | 34 | 2 |
| 3.74 | 1.35 | 0.00 | 0 | 170 | 37 | 35 | 2 |
| 3.74 | 1.35 | 0.05 | 1 | 170 | 18 | 18 | 0 |
| 3.74 | 1.35 | 0.10 | 2 | 170 | 12 | 12 | 0 |
| 3.74 | 1.35 | 0.20 | 4 | 170 | 10 | 10 | 0 |

| | | | | | | | |
|---|---|---|---|---|---|---|---|
| (1) Curing temperature. | | | | | | | |
| (2) Total surface energy, determined according to the Owens-Wendt-Rabel-Kaeble method. | | | | | | | |
| (3) The disperse part of the surface energy, determined according to the Owens-Wendt-Rabel-Kaeble method. | | | | | | | |
| (4) The polar part of the surface energy, determined according to the Owens-Wendt-Rabel-Kaeble method. | | | | | | | |

From Table 1 it follows that the surface energy is clearly a function of the amount of PFPE-COOH. A drastic reduction of the surface energy can already be obtained when 1 wt.% PFPE-COOH is added. The surface energy then roughly corresponds with that of PTFE. The contribution of the polar component of the surface energy also decreases (becomes negligibly small) when PFPE-COOH is added.

In coatings with 2 and 4 wt.% PFPE-COOH it was almost impossible to apply a water drop onto the coating. The drop kept 'sticking' to the needle. The coatings showed an extremely hydrophobic behavior.

### Example 4

A specific amount of an epoxy resin (Eurepox 721, Witco) was weighed into a 25 mL flask. Then an amount of an amine cross-linker (Euredur 14, Witco) and an amount of carboxylic acid-terminated PFPE (Krytox 157 FSL, DuPont) were added. The mixture was stirred for 2 minutes with a spatula and then applied onto an aluminum plate (degreased in a boiling 2-propanol/n-hexane bath). With a 50 µm spreading knife the mixture was spread. The coating was cured in an oven for 1 hour at 140°C. Coatings were prepared with different amounts of PFPE-COOH. They were also cured at 160°C. Of these coatings, the surface energy was determined according to the Owens-Wendt-Rabel-Kaelble method. The coatings prepared and the surface energy determined are listed in Table 2.

**Table 2.**

| *Tested epoxy binder*/*amine cross-linker*/*PFPE coating recipes (different PFPE content and curing temperature) were cured for 1 hour. Per coating the surface energy determined according to the Owens- Wendt-Rabel-Kaelble method is also given.* | | | | | | | |
|---|---|---|---|---|---|---|---|
| Epoxy | Amine | PFPE-COOH | PFPE-COOH | T⁽¹⁾ | γₜₒₜ⁽²⁾ | γ_{d}⁽³⁾ | γₚ⁽⁴⁾ |
| (g) | (g) | (g) | (wt%) | (°C) | (mN/m) | (mN/m) | (mN/m) |
| | | | | | | | |
| 3.74 | 1.50 | 0.00 | 0 | 140 | - | - | - |
| 3.74 | 1.35 | 0.00 | 0 | 140 | - | - | - |
| 3.74 | 1.35 | 0.05 | 1 | 140 | 13 | 12 | 1 |
| 3.74 | 1.35 | 0.10 | 2 | 140 | 13 | 11 | 2 |
| 3.74 | 1.35 | 0.20 | 4 | 140 | - | - | - |
| | | | | | | | |
| 3.74 | 1.50 | 0.00 | 0 | 160 | 37 | 35 | 2 |
| 3.74 | 1.35 | 0.00 | 0 | 160 | 36 | 34 | 2 |
| 3.74 | 1.35 | 0.05 | 1 | 160 | 16 | 15 | 1 |
| 3.74 | 1.35 | 0.10 | 2 | 160 | 11 | 10 | 1 |
| 3.74 | 1.35 | 0.20 | 4 | 160 | 11 | 10 | 1 |

| | | | | | | | |
|---|---|---|---|---|---|---|---|
| (1) Curing temperature. | | | | | | | |
| (2) Total surface energy, determined according to the Owens-Wendt-Rabel-Kaeble method. | | | | | | | |
| (3) The disperse part of the surface energy, determined according to the Owens-Wendt-Rabel-Kaeble method. | | | | | | | |
| (4) The polar part of the surface energy, determined according to the Owens-Wendt-Rabel-Kaeble method. | | | | | | | |

In coatings cured for only 1 hour, too, it was found that a clear reduction of the surface energy had occurred during addition of PFPE-COOH.

In the coating with 4% PFPE-COOH cured at 160°C, it was almost impossible to apply a water drop onto the surface. The drop kept 'sticking' to the needle. This coating showed an extremely hydrophobic behavior. It was found impossible to apply small drops onto the surface. Only large drops which could no longer keep 'sticking' to the needle, could be applied.

In the 4% PFPE-COOH coating cured at 140°C the water drop proved to be unstable. In the first instance, a contact angle of ca. 110° was measured, which, however, decreased to 95° within ten seconds. The large amount of the coating surface of PFPE-COOH could explain this effect. If too much PFPE-COOH is present, it can no longer be covalently built in by a local shortage of epoxy groups, which has the result that non-covalently bonded PFPE is present with polar carboxylic acid groups.

### Example 5 (Comparative example)

There were also prepared coatings on the basis of linear perfluoroalkanoic acids. For this the same epoxy system was used as in the PFPE-epoxy coatings. An epoxy component (e.g. Eurepox 721 from Witco) was mixed with an amine cross-linker (e.g. Euredur 14 from Witco), and an amount of a perfluoroalkanoic acid (e.g. perfluoroheptanoic acid (PFH) was added, after which the mixture was stirred with a spatula for 2 minutes. The coating formulation was then applied onto a degreased aluminum plate and spread with a 50 µm coating knife. Then the coatings were cured at a specific temperature (50, 80, 110, or 140°C) Table 3 indicates which amounts are used for the coating formulations.

**Table 3.**

| *Tested epoxy binder*/*amine cross-linker*/*PFPE coating recipes* | | | | |
|---|---|---|---|---|
| Epoxy | Amine | PFH | PFH | Curing temperature |
| (g) | (g) | (g) | (wt%) | (°C) |
| | | | | |
| 3.74 | 1.50 | 0.00 | 0.0 | 50 |
| 3.74 | 1.35 | 0.00 | 0.0 | 50 |
| 3.74 | 1.35 | 0.05 | 1.0 | 50 |
| 3.74 | 1.35 | 0.10 | 2.0 | 50 |
| | | | | |
| 3.74 | 1.50 | 0.00 | 0.0 | 80 |
| 3.74 | 1.35 | 0.00 | 0.0 | 80 |
| 3.74 | 1.50 | 0.05 | 1.0 | 80 |
| 3.74 | 1.35 | 0.10 | 2.0 | 80 |
| | | | | |
| 3.74 | 1.50 | 0.00 | 0.0 | 110 |
| 3.74 | 1.35 | 0.00 | 0.0 | 110 |
| 3.74 | 1.35 | 0.05 | 1.0 | 110 |
| 3.74 | 1.35 | 0.10 | 2.0 | 110 |
| | | | | |
| 3.74 | 1.50 | 0.00 | 0.0 | 140 |
| 3.74 | 1.35 | 0.00 | 0.0 | 140 |
| 3.74 | 1.35 | 0.05 | 1.0 | 140 |
| 3.74 | 1.35 | 0.10 | 2.0 | 140 |
| | | | | |

All coatings showed drastic "dewetting" effects. No good coatings were formed. On the basis of this epoxy formulation with linear fluoroalkanoic acid additions, it is not possible to prepare acceptable coatings.

The addition of a perfluoroalkanoic acid in salt form (e.g. ammonium perfluoroheptanoate) gave no good coatings either. After spreading, a layer full of bubbles and irregularities was formed. In the oven, dewetting directly occurred.

### Example 6 (comparative example)

A water-supported polyurethane finish on the basis of an aliphatic polycarbonate (Permutex WF-4664; 35% solids in water/NMP 12/88 (w/w); Stahl Holland bv) was formulated with a modified polycarbodiimide cross-linker (Permutex XR-5560; 50% solids in NMP; Stahl Holland bv). A specific amount of carboxylic acid-terminated PFPE (Krytox 157 FSL, DuPont) was added. After having stirred all components with a spatula for 2 minutes, an amount of coating formulation was applied onto a degreased aluminum plate and spread with a spreading knife (50 µm). Then the coating was cured in an oven for 1 day.

Table 4 indicates the amounts of the employed components and the curing temperature.

**Table 4.**

| *Tested polyurethane*/*polycarbodiimide*/*PFPE coating recipes* | | | | |
|---|---|---|---|---|
| WF | XR | PPPE-COOH | PFPE-COOH | Curing temperature |
| (g) | (g) | (g) | (wt%) | (°C) |
| | | | | |
| 2.00 | 0.112 | 0.0 | 0 | 50 |
| 2.00 | 0.112 | 18.0 | 0.8 | 50 |
| 2.00 | 0.112 | 40.0 | 1.9 | 50 |
| 2.00 | 0.112 | 73.0 | 3.3 | 50 |
| 2.00 | 0.112 | 0.0 | 0 | 80 |
| 2.00 | 0.112 | 18.0 | 0.8 | 80 |
| 2.00 | 0.112 | 40.0 | 1.0 | 80 |
| 2.00 | 0.112 | 73.0 | 3.3 | 80 |
| 2.00 | 0.112 | 0.00 | | 110 |
| 2.00 | 0.112 | 18.0 | 0.8 | 110 |
| 2.00 | 0.112 | 40.0 | 1.9 | 110 |
| 2.00 | 0.112 | 73.0 | 3.3 | 110 |
| 2.00 | 0.112 | 0.00 | 0 | 140 |
| 2.00 | 0.112 | 18.0 | 0.8 | 140 |
| 2.00 | 0.112 | 40.0 | 1.9 | 140 |
| 2.00 | 0.112 | 73.0 | 3.3 | 140 |

Of the formulations without PFPE-COOH, fine homogeneous films could be formed. Formulations with PFPE-COOH gave no good coatings. Strong "dewetting" effects occurred, i.e. the coating did not wet the substrate surface well. There were formed domains with much coating material and domains without coating material. Nor could curing at different temperatures give an improvement in the coating quality.

### Example 7 (Comparison)

Different PU coating formulations (on the basis of 4 g Desmodur N75 (Bayer) and 5 g Desmophen 650 (Bayer)) were prepared according to Example 4 with different amounts of added monofunctional fluorine alcohol (1H,1H,2H,2H-perfluorooctanol, abbreviation: F6H2OH) and cured at different curing temperatures.

In Table 5 are listed the results of the surface energy determinations. There were used PU coating formulations to which F6H2OH was added. Apparently, the surface energy was not influenced by the amount of fluorine alcohol present. This is clearly visible in Figure 2, in which the surface energy is given as a function of the added amount of F6H2OH. At these low added amounts of fluorine alcohol no reduction of the surface energy was obtained.

**Table 5.**

| *Surface energy of prepared urethane coatings as a function of the added amount of F6H2OH and the curing temperature. All coatings were cured for 24 hours.* | | | | |
|---|---|---|---|---|
| F6H2OH (wt%) | T_{curing} (°C) | γₜₒₜ (mN/m) | γ_{d} (mN/m) | γₚ (mN/m) |
| 0.0 | 50 | 45.2 | 41.9 | 3.3 |
| 0.1 | 50 | 45.6 | 42.3 | 3.4 |
| 0.5 | 50 | 45.1 | 41.3 | 3.8 |
| 1.0 | 50 | 44.7 | 41.0 | 3.7 |
| 0.0 | 80 | 44.0 | 40.6 | 3.5 |
| 0.1 | 80 | 44.7 | 41.0 | 3.7 |
| 0.5 | 80 | 43.8 | 39.8 | 4.0 |
| 1.0 | 80 | 43.8 | 40.1 | 3.7 |
| 0.0 | 110 | 43.1 | 40.3 | 2.8 |
| 0.1 | 110 | 44.1 | 40.5 | 3.6 |
| 0.5 | 110 | 44.1 | 39.5 | 4.6 |
| 1.0 | 110 | 41.9 | 39.4 | 2.5 |

### Example 8

There were also carried out experiments with PFPE-COOH as fluorine-containing additive. It was found that these coatings gave a clearly lowered surface energy. This is indicated in Table 6.

**Table 6:**

| *Surface energy of the prepared polyurethane coatings as a function of the amount of added PFPE-COOH and the curing temperature. All coatings were cured for 24 hours.* | | | | |
|---|---|---|---|---|
| PFPE-COOH (wt%) | T_{cure} (°C) | γₜₒₜ (mN/m) | γ_{d} (mN/m) | γₚ (mN/m) |
| 0.0 | 50 | 42.6 | 40.4 | 2.2 |
| 1.0 | 50 | 14.1 | 10.0 | 4.0 |
| 5.0 | 50 | 14.0 | 10.1 | 3.8 |
| 0.0 | 80 | 37.9 | 36.0 | 1.9 |
| 1.0 | 80 | 24.3 | 22.4 | 1.9 |
| 5.0 | 80 | 16.7 | 15.0 | 1.7 |
| 0.0 | 110 | 42.2 | 39.6 | 2.6 |
| 1.0 | 110 | 18.3 | 16.7 | 1.6 |
| 5.0 | 110 | 13.1 | 12.1 | 1.0 |

The surface energy clearly decreased at an increasing PFPE-COOH content, especially at the higher curing temperatures. This is probably caused by the increased reactivity of the coating formulation at higher temperature, so that the mobility of the PFPE-COOH decreases.

For the majority of PFPE-COOH/PU coatings a good chemical resistance was found. All coatings cured at 50°C or more withstood the 110 double 'rubs' in a MEK rub test without problems.

The adhesion to an aluminum substrate, however, was less good. On the basis of cross-cut tests, it was found that all coatings showed a poorer adhesion.

To improve the adhesion, a two-step coating application was carried out. In the first step, a PU coating formulation to which no PFPE-COOH was added was applied onto an aluminum substrate. After a short time there was applied a second PU coating formulation to which an amount of PFPE-COOH was added. This process gave a good adhesion with retention of all favorable properties (chemical resistance and low surface energy).

More in detail, 1.00 g Desmodur N75 and 1.25 g Desmophen 650 were mixed in a glass flask by means of a spatula for two minutes. Then the coating formulation was spread on a degreased aluminum plate with a 50 µm spreading knife. The coating was cured in an oven for 8 minutes at 80°C. After this short curing period, a second coating layer was applied in the same manner as the first layer. This second layer was based on 3.00 g Desmodur N75, 3.76 g Desmophen 650 arid 0.07 g (1 wt%) Krytox FSL 157. After application of this coating the coating was cured at 80°C for 24 hours. The resulting coating withstood 110 double rubs in a MEK rub test. The surface energy was 17.3 mN/m.

## Claims

1. A coating composition comprising a curable coating system consisting of a cross-linkable resin and a cross-linking agent, as well as a functional fluorine compound capable of reacting with the cross-linkable resin and/or the cross-linking agent, but having a lower reactivity than the cross-linking agent and/or the cross-linkable resin.

2. A composition according to claim 1, in which the functional fluorine compound a carboxylic acid-containing non-linear fluorine compound is.

3. A composition according to claim 1 or 2, in which the functional fluorine compound is a monocarboxylic acid-terminated perfluoropolyether or perfluorooligoether.

4. A composition according to any of the preceding claims, in which the functional fluorine compound is present in an amount ranging between 0.5 and 5, preferably between 1 and 3 wt.%, and most preferably between 1 and 2 wt.%.

5. A composition according to any of the preceding claims, in which the cross-linkable resin is an epoxy resin.

6. A composition according to any of claims 1-4, in which the cross-linkable resin is a urethane resin.

7. An asymmetric coating layer consisting of a cured coating system having on the air side a layer of functional fluorine compound covalently bonded to the cured coating system.

8. A coating layer according to claim 7 having a surface energy of less than 20 mN/m.

9. A method for coating a substrate comprising the application of a layer of the composition according to any of claims 1-6, followed by curing the composition under such conditions that the functional fluorine compound diffuses to the air side of the layer and then forms covalent bonds with cross-linkable resin or the cross-linking agent.

## Patentansprüche

1. Beschichtungszusammensetzung, die ein härtbares Beschichtungssystem, das aus vernetzbarem Harz und Vernetzungsmittel sowie einer funktionellen Fluorverbindung besteht, die in der Lage ist, mit dem vernetzbaren Harz und/oder dem Vernetzungsmittel zu reagieren aber eine niedrigere Reaktivität als das Vernetzungsmittel und/oder das vernetzbare Harz aufweist.

2. Zusammensetzung nach Anspruch 1, in der die funktionelle Fluorverbindung eine Carbonsäure enthaltende nicht-lineare Fluorverbindung ist.

3. Zusammensetzung nach Anspruch 1 oder 2, in der die funktionelle Fluorverbindung ein monocarbonsäureterminierter Perfluorpolyether oder Perfluoroligoether ist.

4. Zusammensetzung nach einem der vorhergehenden Ansprüche, in der die funktionelle Fluorverbindung in einer Menge vorhanden ist, die von 0,5 bis 5, vorzugsweise 1 bis 3 Gew.-% und am meisten bevorzugt 1 bis 2 Gew.-% reicht.

5. Zusammensetzung nach einem der vorhergehenden Ansprüche, in der das vernetzbare Harz ein Epoxyharz ist.

6. Zusammensetzung nach einem der Ansprüche 1 bis 4, in der das vernetzbare Harz ein Urethanharz ist.

7. Asymmetrische Beschichtungsschicht, die aus einem gehärteten Beschichtungssystem, das auf der Luftseite eine Schicht aus funktioneller Fluorverbindung kovalent gebunden an das gehärtete Beschichtungssystem besteht.

8. Beschichtungsschicht nach Anspruch 7 mit einer Oberflächenenergie kleiner als 20 mN/m.

9. Verfahren zur Beschichtung eines Substrats, das die Aufbringung einer Schicht aus der Zusammensetzung gemäß einem der Ansprüche 1 bis 6, gefolgt von der Härtung der Zusammensetzung unter solchen Bedingungen umfasst, dass die funktionelle Fluorverbindung auf die Luftseite der Schicht diffundiert und dann kovalente Bindungen zu dem vernetzbaren Harz oder dem Vernetzungsmittel bildet.

## Revendications

1. Composition de revêtement comportant un système de revêtement durcissable constitué d'une résine réticulable et d'un agent de réticulation, ainsi qu'un composé de fluor fonctionnel capable de réagir avec la résine réticulable et/ou l'agent de réticulation, mais ayant une réactivité inférieure à celle de l'agent de réticulation et/ou de la résine réticulable.

2. Composition selon la revendication 1, dans laquelle le composé de fluor fonctionnel est un composé de fluor non-linéaire contenant un acide carboxylique.

3. Composition selon la revendication 1 ou 2, dans laquelle le composé de fluor fonctionnel est un perfluoropolyéther ou un perfluorooligoéther à terminaison d'acide monocarboxylique.

4. Composition selon l'une quelconque des revendications précédentes, dans laquelle le composé de fluor fonctionnel est présent selon une quantité se trouvant dans la plage comprise entre 0,5 et 5, de préférence entre 1 et 3 % en poids, et de manière la plus préférée entre 1 et 2 % en poids.

5. Composition selon l'une quelconque des revendications précédentes, dans laquelle la résine réticulable est une résine époxy.

6. Composition selon l'une quelconque des revendications 1 à 4, dans laquelle la résine réticulable est une résine uréthanne.

7. Couche de revêtement asymétrique constituée d'un système de revêtement durci ayant sur le côté d'air une couche de composé de fluor fonctionnel lié de manière covalente au système de revêtement durci.

8. Couche de revêtement selon la revendication 7, ayant une énergie surfacique de moins de 20 mN/m.

9. Procédé pour revêtir un substrat comportant l'application d'une couche de la composition selon l'une quelconque des revendications 1 à 6, suivie d'un durcissement de la composition sous des conditions telles que le composé de fluor fonctionnel se diffuse vers le côté d'air de la couche et forme alors des liaisons covalentes avec la résine réticulable ou l'agent de réticulation.
